# DEMANDE DE BREVET EUROPEEN

(11) **EP 4 227 190 A1**
(43) Date de publication de la demande: **16.08.2023**
(21) Numéro de dépôt: 23155766.1
(22) Date de dépôt: 09.02.2023
(51) Int. Cl.: B61L 15/00, B61L 23/04, B61K 9/08, B61F 19/06, G01F 23/72

(54) **SYSTÈME D ASSISTANCE À LA CONDUITE D'UN VÉHICULE ET VÉHICULE ASSOCIÉ**

(30) Priorité: 10.02.2022 FR 2201168
(71) Demandeur: ALSTOM Holdings, 93400 Saint-Ouen-sur-Seine (FR)
(72) Inventeur: ROUCHE, Tony, 17137 Nieul Sur Mer (FR)
(74) Mandataire: Lavoix

(57) **Abrégé**

Ce système (16) d'assistance à la conduite d'un véhicule (10), comprend :
- un dispositif de mesure (32), adapté pour être installé sous un châssis (12) du véhicule (10) et configuré pour déterminer un niveau d'eau relatif au châssis (12) lors d'un déplacement du véhicule (10) ; et
- un dispositif de commande (34), configuré pour générer une information de commande en fonction du niveau d'eau déterminé.

## Description

La présente invention concerne un système d'assistance à la conduite d'un véhicule.

La présente invention concerne en outre un véhicule comprenant un tel système.

Dans le domaine des véhicules ferroviaire, il peut arriver que les véhicules ferroviaires soient exposés à des intempéries. La présence d'une faible quantité d'eau sur les voies sur lesquelles circulent les véhicules ne pose généralement pas de problème pour le déplacement des véhicules. Toutefois, dans le cas de fortes précipitations, la présence d'eau sur les voies peut s'avérer problématique. En effet, si un niveau d'eau relatif au châssis du véhicule est trop élevé, de l'eau peut pénétrer dans le véhicule, ce qui est non seulement susceptible d'endommager le véhicule mais peut aussi mettre en danger les occupants du véhicule.

Jusqu'à présent, c'est au conducteur du véhicule de déterminer le niveau d'eau relatif au châssis et c'est au conducteur d'adapter la conduite du véhicule en fonction de son estimation du niveau d'eau, afin de limiter les risques d'inondation du véhicule.

Une telle limitation des risques d'inondation ne donne toutefois pas entière satisfaction. En effet, l'évaluation visuelle du niveau d'eau est imprécise et une mauvaise interprétation de la part du conducteur peut mener à une inondation du véhicule. En outre, le conducteur doit continuellement penser à évaluer les risques d'inondation. Ainsi, au-delà d'être fatiguant pour le conducteur, une inattention de la part du conducteur peut déboucher sur une inondation du véhicule.

Un des buts de l'invention est alors de proposer une solution limitant les risques d'inondation d'un véhicule ferroviaire de manière fiable.

A cet effet, l'invention a pour objet un système d'assistance à la conduite d'un véhicule, comprenant :
- un dispositif de mesure, adapté pour être installé sous un châssis du véhicule et configuré pour déterminer un niveau d'eau relatif au châssis lors d'un déplacement du véhicule ; et
- un dispositif de commande, configuré pour générer une information de commande en fonction du niveau d'eau déterminé.

L'utilisation d'un tel système d'assistance à la conduite d'un véhicule permet non seulement de déterminer précisément le niveau d'eau mais permet en outre, par l'information de commande, de mettre en oeuvre des actions permettant d'éviter une inondation.

Selon des modes de réalisation particuliers, le système d'assistance suivant l'invention peut comporter en outre l'une ou plusieurs des caractéristiques suivantes :
- l'information de commande comprend une information d'alerte lorsque le niveau d'eau déterminé est supérieur à un palier d'alerte, le système d'assistance comprenant une unité d'alerte configurée pour générer un signal visuel et/ou auditif lorsque l'information de commande comprend l'information d'alerte ;
- le palier d'alerte correspond à un niveau d'eau tel que la surface de l'eau affleure le châssis du véhicule ;
- l'information de commande comprend une information de contrôle lorsque le niveau d'eau déterminé est supérieur à un palier critique, le système de d'assistance comprenant une unité de contrôle configurée pour contrôler l'actionnement de commandes de conduite du véhicule lorsque l'information de commande comprend une information de contrôle ;
- le palier critique correspond à un niveau d'eau tel que la surface de l'eau soit comprise entre 10 et 30 mm sous un ensemble de portes du véhicule. ;
- le dispositif de mesure comprend :
   - un flotteur, comprenant un aimant configuré pour générer un champ magnétique,
   - un détecteur de champ magnétique, configuré pour détecter le champ magnétique généré par l'aimant du flotteur, et
   - un module de détermination, configuré pour déterminer le niveau d'eau en fonction du champ magnétique détecté par le détecteur de champ magnétique ;
- le dispositif de mesure comprend une cage de protection disposée autour du flotteur, le flotteur étant apte à se déplacer dans la cage de protection, la cage de protection comprenant au moins un orifice pour assurer une communication fluidique entre un intérieur et un extérieur de la cage de protection.

L'invention concerne en outre un véhicule comprenant un système d'assistance à la conduite tel que précité, le véhicule comprenant un châssis, le dispositif de mesure étant installé sous le châssis du véhicule.

Selon des modes de réalisation particuliers, le véhicule ferroviaire suivant l'invention peut comporter en outre l'une ou plusieurs des caractéristiques suivantes :
- le véhicule comprend un chasse-corps disposé sous le châssis, le dispositif de mesure s'étendant relativement au châssis au-dessus du chasse-corps ; et
- le véhicule comprend une extrémité et une roue d'extrémité, la roue d'extrémité étant la roue du véhicule la plus proche de l'extrémité du véhicule, le dispositif de mesure étant disposé entre l'extrémité et la roue d'extrémité.

Ces caractéristiques et avantages de l'invention apparaîtront à la lecture de la description qui va suivre, donnée uniquement à titre d'exemple, et faite en référence aux dessins annexés, sur lesquels :
[Fig 1] la figure 1 est une représentation schématique d'un véhicule ferroviaire vu de côté, comprenant un système de détection d'inondation selon l'invention ; et
[Fig 2] la figure 2 est une représentation schématique du système de détection d'inondation représenté sur la figure 1, le niveau d'eau différant du niveau d'eau de la figure 1.

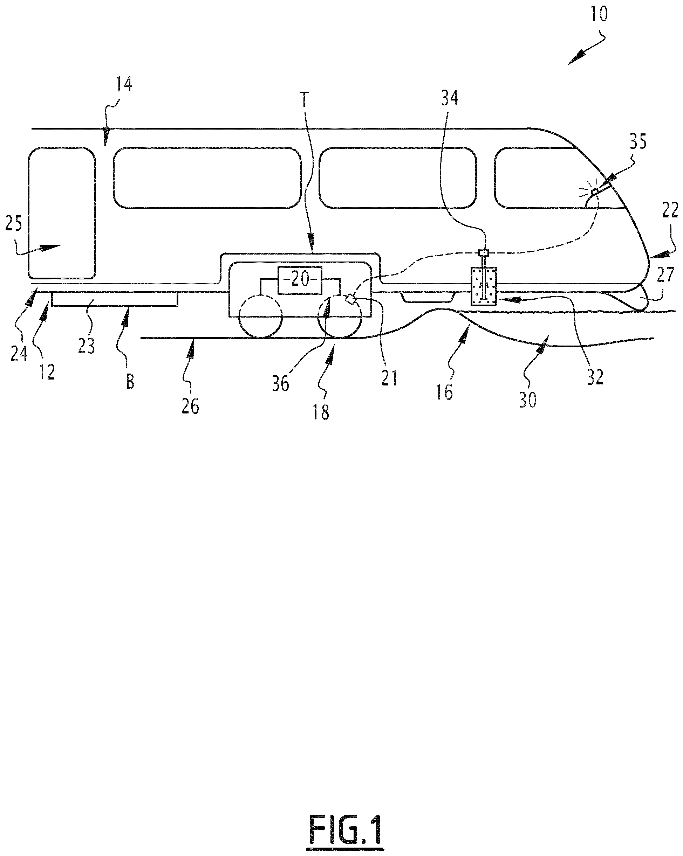

En référence à la figure 1, un véhicule 10 comprend un châssis 12, une caisse 14 et un système 16 d'assistance à la conduite du véhicule. Le véhicule 10 comprend en outre par exemple un ensemble de roues 18 supportant le châssis 12 ainsi qu'un moteur 20 et un dispositif de freinage 21.

Le véhicule comprend par exemple une extrémité 22 et comprend alors, comme visible sur la figure 1, une roue 18 d'extrémité, la roue 18 d'extrémité étant la roue la plus proche de l'extrémité 22.

Le véhicule 10 est par exemple un véhicule ferroviaire tel une locomotive, un train à grande vitesse, un train régional, un tramway ou un métro.

Le châssis 12 supporte la caisse 14 et comprend par exemple des équipements de châssis 23 disposés sous un corps 24 du châssis. Le bas B du châssis est le point du châssis 12 le plus proche de la voie 26 (qui sera décrite plus en détail par la suite) sur lequel le véhicule 10 circule, le haut T du châssis correspondant au point du châssis 12 le plus éloigné de ladite voie 26.

Le véhicule 10 comprend par exemple, comme illustré sur la figure 1, un chasse-corps 27 disposé sous le châssis 12.

Comme visible sur la figure 1, la caisse 14 comprend par exemple une pluralité de portes 25. Les portes 25 comprennent un cadre délimitant une ouverture dans la caisse ainsi qu'un battant, le battant étant mobile relativement au cadre pour obturer ou libérer l'ouverture définie par le cadre.

Les portes 25 sont destinées à permettre à des utilisateurs du véhicule 10 de rentrer ou de sortir du véhicule 10.

Le moteur 20 est configuré pour entrainer les roues 18 en rotation pour assurer le déplacement du véhicule 10 sur une voie 26.

Le dispositif de freinage 21 est configuré pour bloquer la rotation des roues 18, pour stopper le déplacement du véhicule sur la voie 26 et/ou pour immobiliser le véhicule 10 sur la voie 26.

Dans l'exemple dans lequel le véhicule 10 est un véhicule ferroviaire, la voie 26 est une voie ferrée.

Comme illustré sur la figure 1, la voie 26 est susceptible d'être localement inondée par de l'eau et de former un tronçon de voie inondé 30.

Le véhicule 10 se déplaçant sur la voie 26 est alors susceptible de se déplacer dans le tronçon de voie inondé 30.

Lorsque le véhicule 10 se déplace sur le tronçon de voie inondé 30, un niveau d'eau est défini relativement au châssis.

Le niveau d'eau est en particulier défini entre la surface S de l'eau inondant le tronçon de voie inondé 30 et le châssis.

Le niveau d'eau est croissant depuis la voie 26 vers le châssis 12. Le niveau d'eau correspond par exemple à la profondeur d'eau.

Le système d'assistance à la conduite 16 est configuré pour assister un conducteur dans le contrôle du niveau d'eau présent sur la voie 26 sur laquelle le véhicule 10 circule.

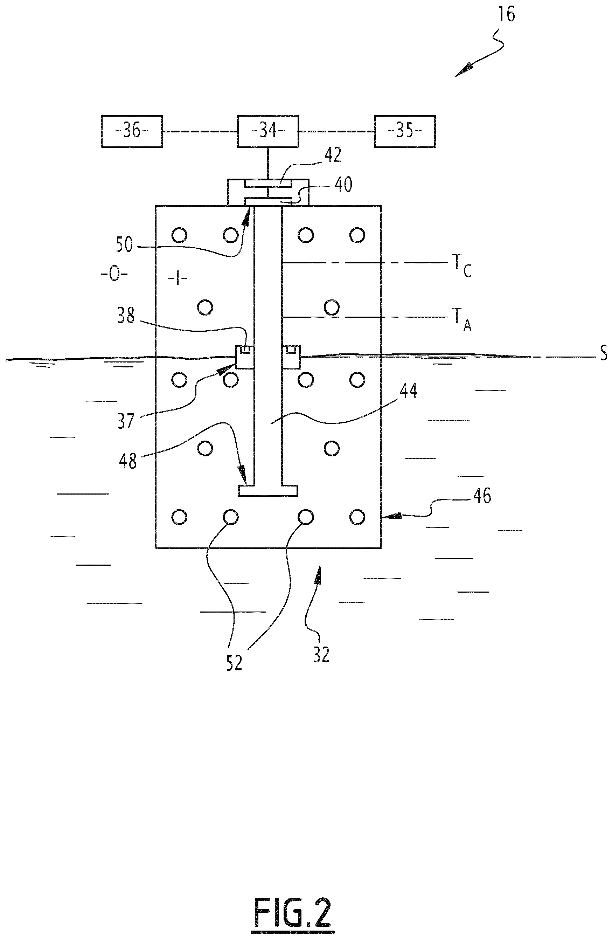

Le système d'assistance à la conduite 16 comprend un dispositif de mesure 32 et un dispositif de commande 34. Comme illustré sur les figures 1 et 2, le système d'assistance à la conduite 16 comprend en outre par exemple une unité d'alerte 35 et/ou une unité de contrôle 36.

Le dispositif de mesure 32 est disposé sous le châssis 12 du véhicule et est configuré pour déterminer le niveau d'eau relatif au châssis 12 lors du déplacement du véhicule 10. Le dispositif de mesure 32 est entre outre par exemple configuré pour déterminer le niveau d'eau relatif au châssis 12 lorsque le véhicule est à l'arrêt, le moteur 20 du véhicule étant en fonctionnement.

Le dispositif de mesure 32 est ainsi configuré pour déterminer les variations de niveau d'eau relativement au châssis 12 dues au déplacement du véhicule sur la voie 26 mais aussi dues à l'évolution du niveau d'eau en un point spatial de la voie.

Comme visible sur la figure 1, le dispositif de mesure 32 est par exemple disposé dans une cavité du châssis et s'étend au moins partiellement au-dessus du bas B du châssis.

Le dispositif de mesure est disposé entre l'extrémité 22 et la roue 18 d'extrémité. Lorsque l'extrémité 22 correspond à l'avant du véhicule 10, le dispositif de mesure 32 est ainsi disposé à l'avant ou proche de l'avant du véhicule et permet la détermination du niveau d'eau avant que l'ensemble du véhicule 10 pénètre sur le tronçon de voie inondé 30 lorsque le véhicule circule sur la voie 26.

Dans l'exemple de la figure 1 où le véhicule comprend un chasse-corps 27, le dispositif de mesure 32 s'étend relativement au châssis au-dessus du chasse-corps 27. En d'autre termes, le bas du garde-corps 27 est disposé plus bas que le bas du dispositif de mesure 32. En d'autres termes encore, la distance minimale entre la voie 26 et le chasse-corps 27 est inférieure à la distance minimale entre la voie 26 et le dispositif de mesure 32, lorsque la voie est plate.

Comme visible sur la figure 2, le dispositif de mesure 32 est par exemple un dispositif de mesure à flotteur. Le dispositif de mesure 32 comprend alors par exemple un flotteur 37 comprenant un aimant 38, un détecteur de champ magnétique 40 et un module de détermination 42.

Le dispositif de mesure 32 comprend en outre par exemple un guide 44 et une cage de protection 46.

Le guide 44 est par exemple allongé selon une direction verticale, c'est-à-dire sensiblement perpendiculairement au plan formé par la voie 26 sur laquelle se déplace le véhicule 10. Le guide 44 comprend par exemple une butée inférieure 48 et une butée supérieure 50, disposées à chacune des extrémités du guide 44. La butée inférieure 48 est plus proche de la voie 26 que la butée supérieure 50.

Le flotteur 37 est par exemple en forme d'anneau. Le flotteur 37 est alors par exemple engagé sur le guide 44 et mobile en translation sur le guide selon l'axe d'élongation du guide. Comme visible sur la figure 2, la course du flotteur 37 sur le guide est limitée par les deux butées inférieure et supérieure 48, 50. En l'absence d'eau sur la voie, le flotteur 37 est par exemple en appui sur la butée inférieure 48.

La densité moyenne du flotteur 37 est inférieure à celle de l'eau, de sorte que le flotteur flotte sur l'eau. A cet effet, dans l'exemple de la figure 2, le flotteur comprend un anneau creux dans lequel est logé l'aimant 38.

L'aimant 38 du flotteur 37 est par exemple lui aussi en forme d'anneau. L'aimant 38 est configuré pour générer un champ magnétique ou génère un tel champ magnétique.

Dans le mode de réalisation présenté en figure 2, le détecteur de champ magnétique 40 est intégré dans la butée supérieure 50 du guide 44.

Le détecteur de champ magnétique 40 est configuré pour détecter le champ magnétique de l'aimant 38 du flotteur 37.

Le champ magnétique détecté par le détecteur de champ magnétique 40 dépend de la position de l'aimant 38 et donc du flotteur 37 par rapport audit détecteur de champ magnétique.

Le détecteur de champ magnétique 40 est par exemple connecté au module de détermination 42 et est configuré pour communiquer une valeur de champ magnétique détectée au module de détermination 42.

Dans le mode de réalisation présenté en figure 2, le module de détermination 42 est intégré dans la butée supérieure 50 du guide 44 dans lequel est intégré le détecteur de champ magnétique 40.

Le module de détermination 42 est configuré pour déterminer le niveau d'eau en fonction du champ magnétique détecté par le détecteur de champs magnétique 40.

Le module de détermination 42 est en particulier configuré pour déduire la position du flotteur 37 sur le guide 44 en fonction du champ magnétique que le détecteur de champ magnétique 40 communique au module de détermination 42. Le flotteur étant configuré pour flotter à la surface de l'eau, le module de détermination 42 est ainsi apte à déterminer le niveau d'eau relativement au châssis 12.

En particulier, dans l'exemple de la figure 2, le module de détermination 42 détermine un niveau d'eau négligeable tant que le champ magnétique détecté par le détecteur de champ magnétique correspond au champ magnétique émis par l'aimant 38 lorsque que le flotteur 37 est en appui contre la butée inférieure 48. Le module de détermination 42 détermine un niveau d'eau donné correspondant au niveau d'eau relatif au châssis lorsque le flotteur flotte entre la butée supérieure 50 et la butée inférieure 48.

La cage de protection 46 est disposée autour du flotteur 37, le flotteur 37 étant apte à se déplacer dans la cage de protection 46.

La cage de protection 46 est par exemple en forme de boite cylindrique disposée autour du guide 44 et permettant le déplacement du flotteur 37 sur le guide 44. La cage de protection 46 délimite alors un intérieur I d'un extérieur O de la cage de protection 46.

La cage de protection 46 est de préférence formée en inox et par exemple en acier inoxydable et par exemple en acier inoxydable 304L selon la norme AISI (acronyme de l'anlgais *American Iron and Steel Institute*).

La cage de protection 46 est adaptée pour résister à des projections de ballast et à protéger le flotteur 37 de projections de ballast.

La cage de protection 46 comprend au moins un orifice 52.

L'au moins un orifice assure une communication fluidique entre l'intérieur I et l'extérieur O de la cage de protection 46.

L'au moins un orifice est configuré pour permettre un remplissage/vidage d'eau de la cage de protection 46, par exemple lorsque la cage de protection est déplacée vers/depuis le tronçon de voie inondé 30.

Comme illustré sur la figure 2, le dispositif de commande 34 est logiquement raccordé au dispositif de mesure, par exemple par une connexion filaire ou une connexion sans fil telle par exemple une connexion hertzienne.

Le dispositif de commande 34 est plus particulièrement configuré pour obtenir le niveau d'eau déterminé par le dispositif de mesure 32.

Le dispositif de commande 34 est alors configuré pour générer une information de commande en fonction du niveau d'eau mesuré par le dispositif de mesure 32.

L'information de commande générée comprend par exemple un information d'alerte lorsque le niveau d'eau déterminé est supérieur à un palier d'alerte T_{A}.

L'information de commande générée comprend par exemple une information de contrôle lorsque le niveau d'eau déterminé est supérieur à un palier critique T_{c}.

L'information de commande générée consiste par exemple en l'information d'alerte lorsque le niveau d'eau déterminé est supérieur au palier d'alerte T_{A} et inférieure au palier critique T_{c}.

L'information de commande générée comprend par exemple à la fois l'information d'alerte et l'information de contrôle lorsque le niveau d'eau déterminé est supérieur au palier d'alerte T_{A}. En variante l'information de commande générée consiste en l'information de contrôle lorsque le niveau d'eau déterminé est supérieur au palier critique T_{c}.

Comme illustré sur la figure 2, le palier d'alerte T_{A} correspond à un niveau d'eau plus faible que le palier critique T_{c}.

Le palier d'alerte correspond par exemple à un niveau d'eau tel que la surface de l'eau S affleure le châssis du véhicule. En d'autre terme, le dispositif de commande génère une information d'alerte lorsque le niveau d'eau est au moins tel que l'eau affleure le châssis 12 du véhicule 10, c'est-à-dire lorsque le niveau d'eau atteint au moins le bas B du châssis 12.

Le palier d'alerte correspond par exemple à une hauteur d'eau comprise entre 100mm et 150mm sous le véhicule 10 et par exemple à une hauteur d'eau de 140mm sous le véhicule 10, au niveau du dispositif de mesure 32.

Le palier critique correspond par exemple à un niveau d'eau tel que la surface de l'eau S soit comprise entre 10mm et 30mm sous l'ensemble des portes 25 du châssis. En d'autres termes, le palier d'alerte correspond à un niveau d'eau pour lequel la surface de l'eau S est comprise entre 10mm et 30mm sous la porte 25 la plus proche de la surface de l'eau S.

Le palier d'alerte correspond par exemple à une hauteur d'eau comprise entre 150mm et 200mm sous le véhicule 10 et par exemple à une hauteur d'eau de 160mm sous le véhicule 10, au niveau du dispositif de mesure 32.

Dans l'exemple des figures 1 et 2, le dispositif de commande 34 est logiquement raccordé à l'unité d'alerte 35 et à l'unité de contrôle 36, par exemple par une connexion filaire ou une connexion sans fil telle par exemple une connexion hertzienne.

L'unité d'alerte 35 est configurée pour générer un signal visuel et/ou auditif lorsque l'information de commande comprend l'information d'alerte. En d'autre termes, lorsque le dispositif de commande 34 génère une information de commande comprenant l'information d'alerte, le dispositif de commande 34 transmet l'information d'alerte à l'unité d'alerte 35 ou contrôle l'unité d'alerte 35 pour que l'unité d'alerte 35 génère un signal visuel et/ou auditif. A cet effet, l'unité d'alerte comprend par exemple un moyen d'affichage et/ou un haut-parleur.

L'unité de contrôle 36 est configurée pour contrôler l'actionnement de commandes de conduite du véhicule lorsque l'information de commande comprend une information de contrôle. En d'autre termes, lorsque le dispositif de commande 34 génère une information de commande comprenant l'information de contrôle, le dispositif de commande 34 transmet l'information de contrôle à l'unité de contrôle 36 ou contrôle l'unité de contrôle 36 pour que l'unité de contrôle 36 contrôle l'actionnement de commandes de conduite du véhicule.

L'unité de contrôle 36 est par exemple connectée au moteur 20 et/ou au dispositif de freinage 21 du véhicule 10. L'actionnement des commandes de conduite correspond par exemple à l'inversion du sens de rotation du moteur 20, pour changer le sens de déplacement du véhicule 10 sur la voie, à l'arrêt du moteur 20 et/ou à l'actionnement du dispositif de freinage pour stopper le déplacement du véhicule sur la voie 26 et/ou pour immobiliser le véhicule 10 sur la voie 26.

Dans un mode de réalisation particulier, l'unité de contrôle 36 est configurée pour afficher une instruction au conducteur du véhicule pour contrôler l'actionnement des commandes de conduite, le conducteur exécutant l'instruction qui lui est affichée en contrôlant l'actionnement des commandes de conduite.

Un exemple du fonctionnement du système d'assistance à la conduite d'un véhicule 16 tel que précédemment décrit va maintenant être présenté.

Lorsque le véhicule 10 circule sur une voie 26 non inondée, le dispositif de mesure 32 détermine un niveau d'eau relatif au châssis étant négligeable ou ne détermine pas de niveau d'eau.

Lorsque le véhicule pénètre un tronçon de voie inondé 30, le dispositif de mesure détermine le niveau d'eau relatif au châssis 12, par exemple par la flottaison du flotteur 37 et la détection du champ magnétique par le détecteur de champ magnétique 40.

Tant que le niveau d'eau relatif au châssis est inférieur aux paliers d'alerte T_{A} et critique T_{c}, le dispositif de commande ne génère pas d'information de commande ou l'information de commande ne comprend pas d'information de contrôle et d'information d'alerte.

Lorsque que le niveau d'eau relatif au châssis atteint le palier d'alerte T_{A} et/ou dépasse ledit palier d'alerte T_{A}, par exemple en raison du déplacement du véhicule 10 dans le tronçon de voie inondé 30, le dispositif de commande génère une information de commande comprenant une information d'alerte, et l'unité d'alerte génère un signal visuel et/ou auditif. Le conducteur du véhicule est ainsi directement informé de la criticité de la situation.

Lorsque que le niveau d'eau relatif au châssis atteint le palier critique T_{c} et/ou dépasse ledit palier critique T_{c}, par exemple en raison du déplacement du véhicule 10 dans le tronçon de voie inondé 30, le dispositif de commande génère une information de commande comprenant une information de contrôle, et l'unité de contrôle 36 vient contrôler l'actionnement de commandes de conduite du véhicule. Le véhicule 10 est par exemple freiné, immobilisé ou le sens de circulation du véhicule 10 est inversé, afin de prévenir une inondation du véhicule, c'est-à-dire notamment prévenir la pénétration d'eau dans le véhicule 10 par l'intermédiaire des ouvertures définies par les portes 25.

## Revendications

1. Système (16) d'assistance à la conduite d'un véhicule (10), comprenant :
- un dispositif de mesure (32), adapté pour être installé sous un châssis (12) du véhicule (10) et configuré pour déterminer un niveau d'eau relatif au châssis (12) lors d'un déplacement du véhicule (10) ; et
- un dispositif de commande (34), configuré pour générer une information de commande en fonction du niveau d'eau déterminé.

2. Système d'assistance (16) selon la revendication 1, dans lequel l'information de commande comprend une information d'alerte lorsque le niveau d'eau déterminé est supérieur à un palier d'alerte (Tₐ), le système d'assistance (16) comprenant une unité d'alerte (35) configurée pour générer un signal visuel et/ou auditif lorsque l'information de commande comprend l'information d'alerte.

3. Système d'assistance (16) selon la revendication 2, dans lequel le palier d'alerte (Tₐ) correspond à un niveau d'eau tel que la surface de l'eau (S) affleure le châssis (12) du véhicule (10).

4. Système d'assistance (16) selon l'une quelconque des revendications précédentes, dans lequel l'information de commande comprend une information de contrôle lorsque le niveau d'eau déterminé est supérieur à un palier critique (T_{c}), le système de d'assistance (16) comprenant une unité de contrôle (36) configurée pour contrôler l'actionnement de commandes de conduite du véhicule (10) lorsque l'information de commande comprend une information de contrôle.

5. Système d'assistance (16) selon la revendication 4, dans lequel le palier critique (T_{c}) correspond à un niveau d'eau tel que la surface de l'eau (S) soit comprise entre 10 et 30 mm sous un ensemble de portes (25) du véhicule (10).

6. Système d'assistance (16) selon l'une quelconque des revendications précédentes, dans lequel le dispositif de mesure (32) comprend :
- un flotteur (37), comprenant un aimant (38) configuré pour générer un champ magnétique,
- un détecteur de champ magnétique (40), configuré pour détecter le champ magnétique généré par l'aimant (38) du flotteur (37), et
- un module de détermination (42), configuré pour déterminer le niveau d'eau en fonction du champ magnétique détecté par le détecteur de champ magnétique (40).

7. Système d'assistance (16) selon la revendication 6, dans lequel le dispositif de mesure (32) comprend une cage de protection (46) disposée autour du flotteur (37), le flotteur (37) étant apte à se déplacer dans la cage de protection (46), la cage de protection (46) comprenant au moins un orifice (52) pour assurer une communication fluidique entre un intérieur (I) et un extérieur (O) de la cage de protection (46).

8. Véhicule comprenant un système (16) d'assistance à la conduite d'un véhicule (10) selon l'une quelconque des revendications 1 à 7, le véhicule (10) comprenant un châssis (12), le dispositif de mesure (32) étant installé sous le châssis (12) du véhicule (10).

9. Véhicule (10) selon la revendication 8, dans lequel le véhicule (10) comprend un chasse-corps (27) disposé sous le châssis (12), le dispositif de mesure (32) s'étendant relativement au châssis (12) au-dessus du chasse-corps (27).

10. Véhicule (10) selon la revendication 8 ou 9, dans lequel le véhicule (10) comprend une extrémité (22) et une roue (18) d'extrémité, la roue (18) d'extrémité étant la roue (18) du véhicule la plus proche de l'extrémité (22) du véhicule (10), le dispositif de mesure (32) étant disposé entre l'extrémité (22) et la roue (18) d'extrémité.
